# EUROPÄISCHE PATENTSCHRIFT

(11) **EP 0 331 870 B1**
(45) Veröffentlichungstag und Bekanntmachung des Hinweises auf die Patenterteilung: **02.06.1993**
(21) Anmeldenummer: 89100388.1
(22) Anmeldetag: 11.01.1989
(51) Int. Cl.: B41F 13/20

(54) **Lagereinrichtung**
Bearing device
Palier

(30) Priorität: 11.03.1988 DE 3808142
(43) Veröffentlichungstag der Anmeldung: 13.09.1989
(73) Patentinhaber: Maschinenfabrik GOEBEL GmbH, D-64210 Darmstadt (DE)
(72) Erfinder: Thomas, Hermann, D-6100 Darmstadt (DE); Herd, Josef, D-6115 Münster (DE)

(56) Entgegenhaltungen:
- DE-A- 1 602 157
- DE-A- 1 950 904
- DE-A- 2 034 490
- DE-B- 1 575 479
- DE-B- 2 033 515
- PATENT ABSTRACTS OF JAPAN vol. 4, no. 33 (M-3)(515) 21 März 1980; JP-A-55 8371

## Beschreibung

Die vorgeschlagene Einrichtung bezieht sich auf des Lagern eines Zylinderpaares, insbesondere für Zylinder zum Bearbeiten von Bogen oder Bahnen aus Papier, Gewebe, Folie, Kunststoffen, Metallen o. dgl. mit mindestens zwei Lagergehäusen je Zapfen der jeweils beteiligten Zylinder, wobei der gegenseitige Abstand der Zylinder einstellbar, und ein Lager jedes Zapfens einer Druckeinrichtung ausgesetzt ist.

Eine Einrichtung auf diesem Gebiet ist beispielsweise aufgrund der DE-PS 12 53 282 vorbekannt. Bei dieser Einrichtung handelt es sich jedoch um eine Einrichtung, mit der unerwünschtes Spiel unwirksam gemacht werden soll, nicht jedoch um eine Einrichtung, mit der Kräfte, die während des Arbeitsvorganges der beteiligten Zylinder auftreten, so beherrscht werden sollen, daß sich eine möglichst geringfügige und/oder beherrschbare Durchbiegung aller beteiligten Maschinenelemente und/oder Maschinenteile ergibt.

Aufgrund der DE-AS 20 33 515 ist daneben eine Einrichtung bekanntgeworden, bei der die Zapfen eines einzigen Zylinders und damit der Zylinder selbst mit Hilfe von Druckmittelzylindern durchgebogen werden sollen. Hier wirken die beteiligten Druckmittelzylinder auf die axial außenliegenden Enden der Zapfen, wohingegen ein ortsfest angeordnetes Lager am axial innenliegenden Ende jedes Zylinderzapfens angeordnet ist. Demzufolge kann sich der hier beschriebene Zylinder aufgrund der auf ihn ausgeübten Biegekräfte an die anderweitig vorgegebene Durchbiegung eines anderen Zylinders anpassen. Daher wird hier nur der eine Zylinder durchgebogen, während der andere Zylinder unbeeinflußt bleibt.

Daneben ist durch die DE-AS 15 75 479 eine weitere Einrichtung vorbekannt, bei der jeweils zwei Lager je Zapfen eines beteiligten Zylinders angeordnet sind. Hier soll ein Walzenabstand genau eingestellt werden, weshalb auch jedes der beteiligten Lager in einem Nebengehäuse gelagert ist und alle Lager jedes Zylinderzapfens durch eine druckausübende Einrichtung derart aufeinandergedrückt werden, daß in den Lagern etwa vorhandenes Spiel beseitigt wird. Keines der lager ist jedoch in dem jeweiligen Gestell, das die beiden Zylinder des Zylinderpaares trägt, unmittelbar gelagert. Darüber hinaus ist eine Verstellung des Abstandes der Achsen der beiden Zylinder recht unbequem, denn dazu müßte ein Keil ohne Zuhilfenahme irgendwelcher Einstellvorrichtungen entgegen der auf ihn wirkenden Reibungskräfte feinfühlig verstellt werden. Es erfordert jedoch einen hohen zeitlichen Aufwand, um diesen Keil genau positionieren zu können.

Es besteht daher die Aufgabe, eine Einrichtung der in Rede stehenden Art derart auszubilden, daß sie bequem bedienbar wird und weitestgehend auch während des Betriebes an variable oder variierende Betriebsweisen der beteiligten Zylinder angepaßt werden kann.

Diese Aufgabe wird dadurch gelöst, daß jeder Zapfen jedes beteiligten Zylinders mindestens zwei voneinander getrennten, einander im wesentlichen parallel verlaufenden Kraftflüssen unterliegt, von denen einer dem Zylinder näher und ein anderer entfernter verläuft und jeder der beiden Kraftflüsse von dem Gestell ausgehend zunächst eine Lagerbüchse des ersten Zylinders durchsetzt, danach von der Lagerbüchse des ersten zu derjenigen des zweiten Zylinder wechselt und danach von der Lagerbüchse des zweiten Zylinders wieder in das Gestell oder in umgekehrter Reinhenfolge verläuft.

Aufgrund der vorgeschlagenen Lösung wird es möglich, daß der Fluß an der Biegung oder den Biegungen beteiligten Kräfte unmittelbar am Gestell der Maschine entlangfließt, so daß es innerhalb praktischer Grenzen zu keiner oder nur äußerst geringer Durchbiegung des Gestells kommt. Darüber hinaus ergeben sich zahlreiche Möglichkeiten beispielsweise zum Einstellen oder für das Verstellen der Durchbiegung der Zylinder, so daß es ermöglicht wird, die Durchbiegung der Zylinder und der übrigen Maschinenteile innerhalb sehr weiter Grenzen zu wählen und zu beherrschen. Dazu gehört beispielsweise, daß die Biegung der Zylinder oder eine Biegung, die den während des Betriebes auf diese Zylinder wirkenden Kräfte entgegengerichtet ist, auch während des Umlaufes der Zylinder, also während des laufenden Betriebes der Maschine, in der diese Zylinder eingebaut sind, gegebenenfalls selbsttätig oder aber wahlweise auch durch Eingreifen einer Bedienungsperson eingestellt oder nachgestellt werden können. Beispielsweise ist es möglich, die Biegungen oder eine die Biegung aufhebende Gegenbiegung mit Hilfe eines regelbaren Programms, das auch automatisiert ablaufen kann, während des Betriebs mehr oder weniger stark variierend einzustellen, wobei der Druck des in den Druckmittelzylindern befindlichen Druckes nicht unbedingt zeitweise auf Null abfallen muß.

In Weiterbildung des Grundgedankens ist es möglich, daß sowohl zwischen den Lagerbüchsen des jeweils äußeren als auch des jeweils inneren Lagers zwischen dem einen Teil des Gestells und der Lagerbüchse des zweiten Zylinders als auch dem anderen Teil des Gestells und der Lagerbüchse des ersten Zylinders und den Lagerbüchsen des ersten und des zweiten Zylinders mindestens ein Druckmittelzylinder angeordnet ist. Außerdem wird vorgeschlagen, daß jeweils zwischen Lagerbüchse und Gestell sowie zwischen den Lagerbüchsen verschiedener Zylinder mindestens ein Druckmittelzylinder angeordnet ist. Die dabei beteiligten Lager können entweder Gleitlager sein oder vorzugsweise aus Wälzlagern bestehen, die insbesondere auch mehrere axial nebeneinanderliegende Reihen von Wälzkörpern enthalten, also sogenannte Mehrreihenlager sind. Die in den Druckmittelzylindern anstehenden Drücke können entweder für jeden Druckmittelzylinder separat oder jeweils für Gruppen von Druckmittelzylindern, also für mehrere Druckmittelzylinder gleichzeitig und gemeinsam eingestellt, gesteuert oder geregelt werden. Aus Kostengründen kann es dabei vorteilhaft sein, eine einfachere Ausführung dadurch zu erzielen, daß ein Teil der Druckmittelzylinder durch verstellbare Spannschlösser, verstellbare Anschlagschrauben o. dgl. ersetzt werden. Dies führt jedoch zu einer Einschränkung der Möglichkeiten, mit denen die Einrichtung während ihres Betriebes betrieben werden kann.

Anhand dreier in den beigefügten Figuren schematisch abgebildeter Ausführungsbeispiel wird die vorgeschlagene Einrichtung näher erläutert. In den Figuren sind im vorliegenden Zusammenhang nicht wesentliche Maschinenteile wegen einer übersichtlicheren Darstellungsweise nicht dargestellt. Die nicht dargestellten Teile sind dem Fachmann jedoch hinreichende bekannt. Außerdem wird darauf hingewiesen, daß die Ausführungsbeispiele in verschiedener Weise abgeändert werden können, ohne den der Einrichtung zugrundeliegenden Grundgedanken zu verlassen.

Die einzelnen Figuren bedeuten:
- Fig. 1:: Schematische Seitenansicht
- Fig. 2:: Schnitt II-II in Fig. 3
- Fig. 3:: Schnitt III-III in Fig. 2

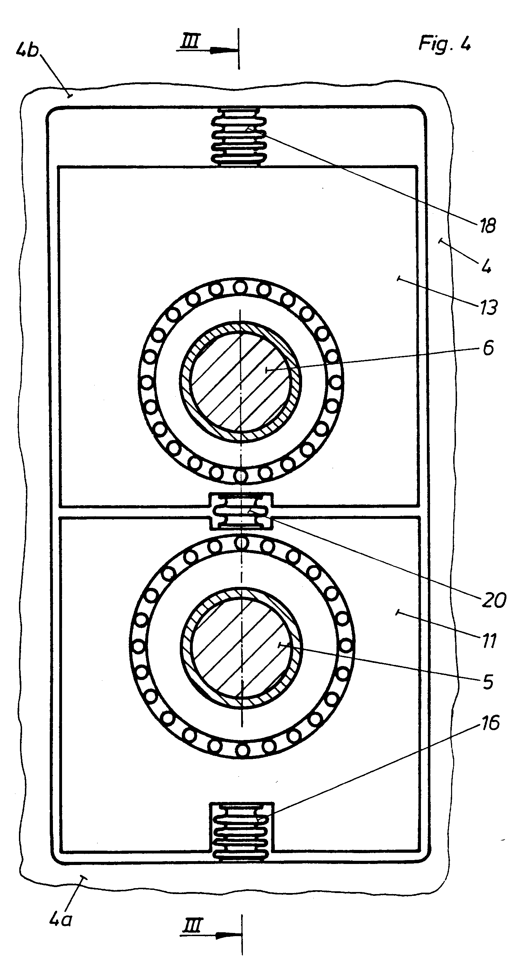

- Fig. 4:: Schnitt IV-IV in Fig. 3
- Fig. 5:: Schnitt II-II in Fig. 3 bei einem zweiten Ausführungsbeispiel, entspricht in analoger Weise im wesentlichen auch dem Schnitt IV-IV
- Fig. 6:: Schnitt II-II in Fig. 3 bei einem dritten Ausführungsbeispiel, entspricht in analoger Weise im wesentlichen auch dem Schnitt IV-IV

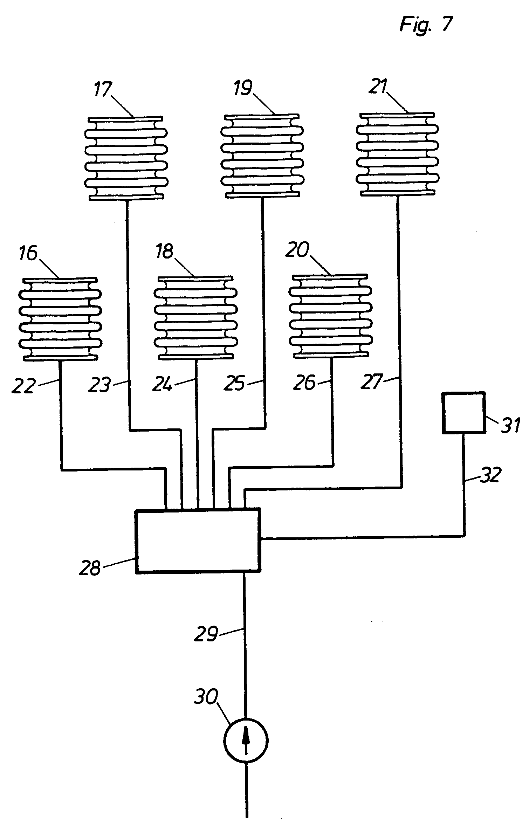

- Fig. 7:: Druckmittelversorgung bei einem ersten Ausführungsbeispiel

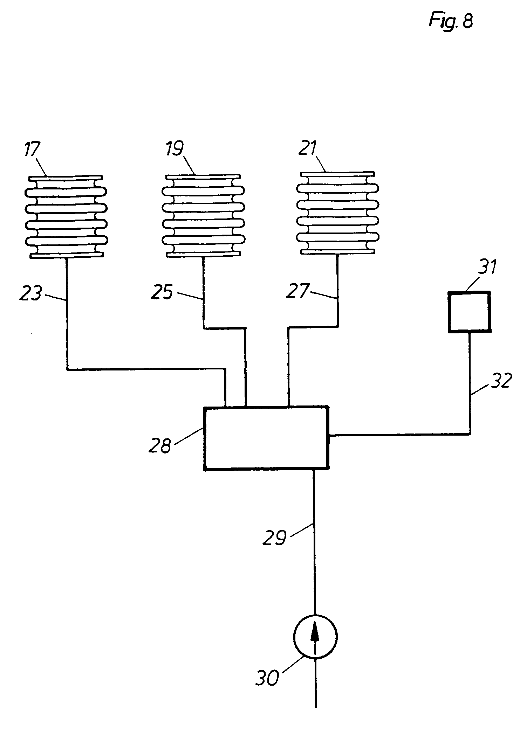

- Fig. 8:: Druckmittelversorgung bei einem zweiten
- Fig. 9:: und dritten Ausführungsbeispiel

Eine Bahn 1 aus Papier, Folie, Gewebe, Kunststoff, Metall o. dgl. - oder aber auch ein derartiger Bogen - läuft zwischen zwei Zylindern 2 und 3 hindurch, wobei sie/er bei dieser Gelegenheit bearbeitet wird. Der Bearbeitungsvorgang kann beispielsweise darin bestehen, daß die Bahn 1 oder der Bogen bedruckt wird. In diesem Fall müßte der eine der beiden Zylinder ein solcher Zylinder sein, der imstande ist, ein Druckmuster auf die Bahn 1 aufzubringen, und der andere Zylinder ein solcher, der imstande ist, die dabei auftretenden Kräfte oder Gegenkräfte aufzunehmen. Die Zylinder können aber auch beispielsweise solche Zylinder sein, die zum Längs- und Querschneiden oder Längs- oder Querperforieren benutzt werden können. Auch jegliche ander Zylinder, mit denen die Bahn 1 oder der Bogen bearbeitet werden können, sind denkbar, was jedoch voraussetzt, daß die beteiligten Zylinder dem jeweils vorliegenden Bearbeitungsvorgang entsprechend ausgestaltet oder ausgerüstet sind.

Damit die während des Bearbeitungsvorganges auf die beteiligten Zylinder wirkenden Kräfte aufgefangen werden können, ist jeder Zylinder mit Zylinderzapfen versehen. Diese Zylinderzapfen sind an jedem stirnseitigen Ende des jeweiligen Zylinders angebracht. Die Lagerung der Zylinderzapfen ist für jeden Zapfen im wesentlichen die gleiche. Die Zapfen der beiden beteiligten Zylinder 2 und 3 wirken jedoch in ähnlicher Weise miteinander zusammen wie die beteiligten Zylinder selbst. Da die Lagerung der Zapfen an beiden Stirnseiten im wesentlichen die gleiche ist - die Zylinderzapfen können gegebenenfalls über die Lagerung hinaus verlängert werden, um Zahnräder ober dgl. für den Antrieb der beiden Zylinder aufzunehmen, falls dies erforderlich sein sollte - braucht zum Verständnis der vorgeschlagenen Einrichtung nur die Lagerung an einer Stirnseite der beteiligten Zylinder beschrieben zu werden. Die Lagerung an der anderen Stirnseite ist im wesentlichen die gleiche.

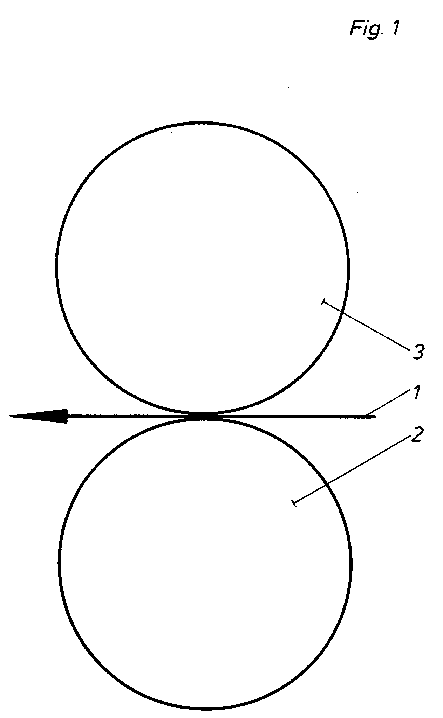

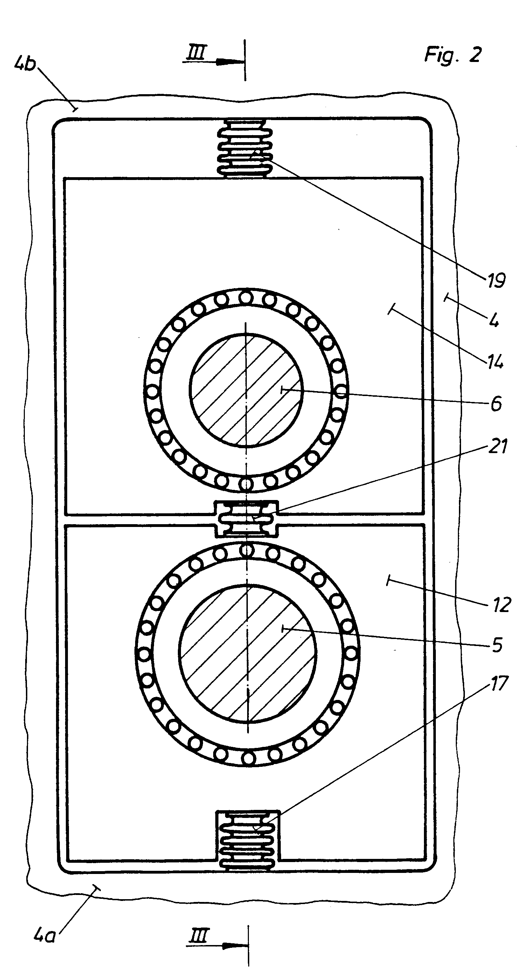

Der Zylinder 2 ist in den Figuren 1 und 2 als unterer Zylinder und der Zylinder 3 als der obere Zylinder dargestellt. Diese Darstellung gilt für eine Bauweise, bei der die beiden Zylinder innerhalb des Gestells 4 übereinanderliegend eingebaut sind. Es ist aber auch möglich, daß die beiden Zylinder nebeneinanderliegen können, so daß eine zu bearbeitende Bahn in vertikaler Richtung zwischen den Zylindern hindurchlaufen kann. Daneben ist es ebenfalls möglich, daß die Zylinder beispielsweise schrägliegend oder aber auch so übereinanderliegend in das Gestell 4 eingebaut sind, daß der Zylinder 2 oben und der Zylinder 3 unten liegt. Es ist daher angemessen, den Zylinder 2 als ersten Zylinder zu bezeichnen und den Zylinder 3 als zweiten Zylinder.

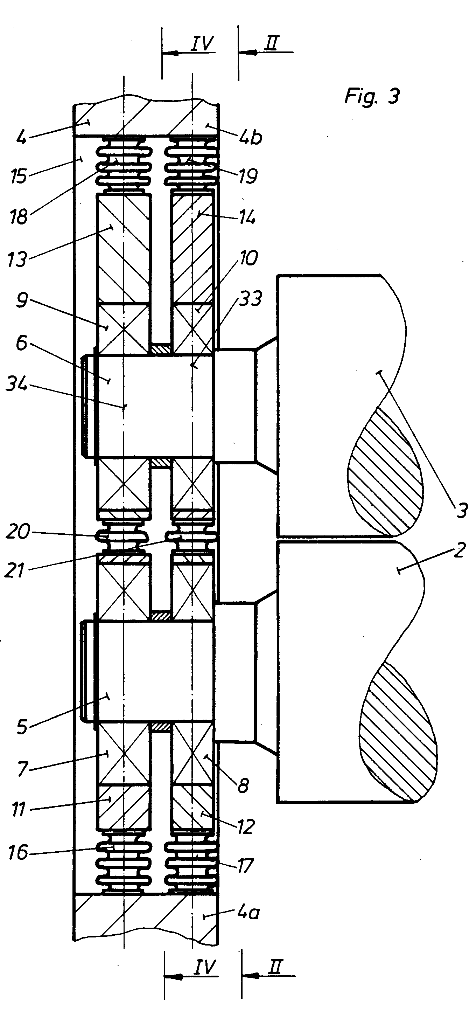

Der erste Zylinder 2 hat erste Zylinderzapfen 5, der zweite Zylinder 3 zweite Zylinderzapfen 6. Auf jedem Zylinderzapfen befinden sich mindestens zwei Lager in Axialrichtung nebeneinander angeordnet. Diese Lager können entweder Gleitlager oder Wälzlager sein. Dabei können die Walzlager auch mehrere in axialer Richtung nebeneinanderliegende Reihen von Wälzkörpern umfassen, also sogenannte mehrreihige Wälzlager sein. Auf den ersten Zylinderzapfen 5 befinden sich beispielsweise die Lager 7 und 8, auf dem zweiten Zylinderzapfen 6 die Lager 9 und 10. Jedes der Lager ist in einer eingenen Lagerbüchse oder einem Lagergehäuse gelagert. Beispielsweise ist das Lager 7 in der Lagerbüchse 11 gelagert, Lager 8 in der Lagerbüchse 12, Lager 9 in der Lagerbüchse 13 und Lager 10 in der Lagerbüchse 14. Alle Lagerbüchsen sind in einem Fenster 15 des Gestells 4 oder in einer entsprechenden Ausnehmung des Gestells 4 angeordnet. Auf diese Weise entstehen im wesentlichen zwei Teilbereiche oder Teile 4a und 4b des Gestells 4, wobei Teil 4a in Fig. 3 beispielsweise unten und Teil 4b in Fig. 3 beispielsweise oben angeordnet ist. Die Lage der einzelnen Teile, ob oben oder unten, rechts oder links o. dgl. ist jedoch für den Grundgedanken ohne Belang.

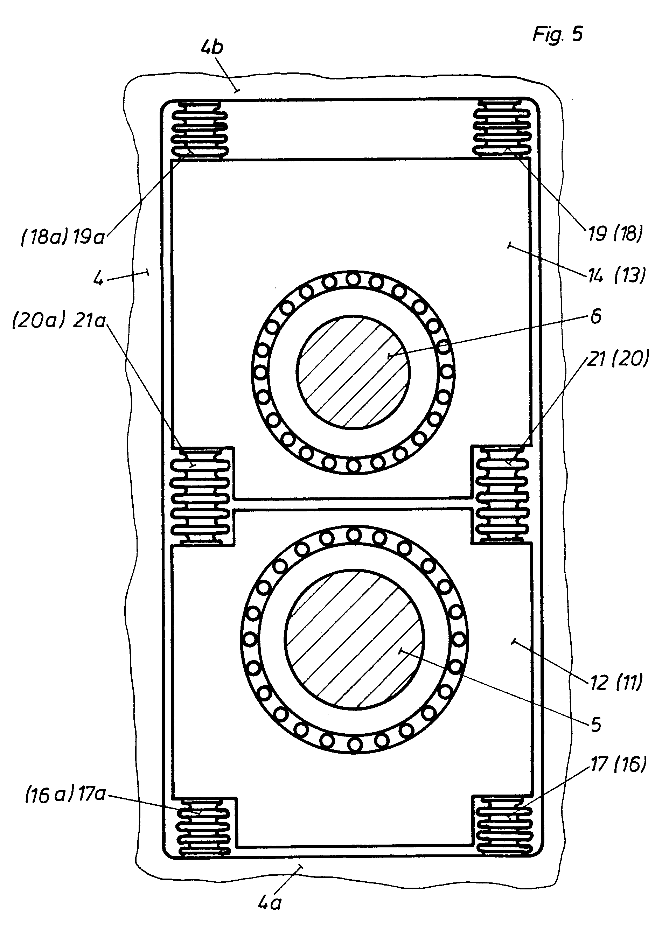

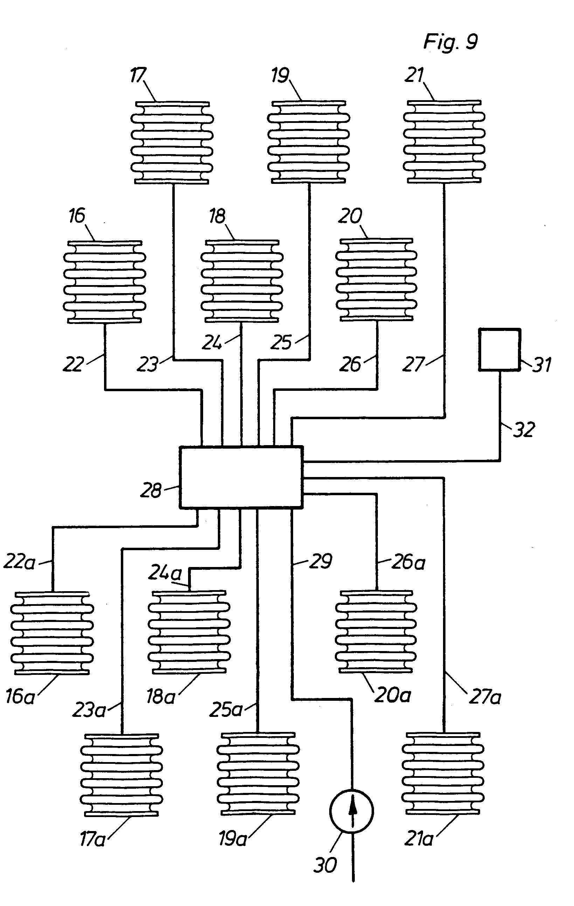

Zwischen der Lagerbüchse 11 und dem Teil 4a ist ein erster Druckmittelzylinder 16 angeordnet. Zwischen der Lagerbüchse 12 und dem Teil 4a ist ein zweiter Druckmittelzylinder 17, zwischen der Lagerbüchse 13 und dem Teil 4b ein dritter Druckmittelzylinder 18 und zwischen Lagerbüchse 14 und dem Teil 4b ein vierter Druckmittelzylinder 19 angeordnet. Zwischen den Lagerbüchsen 11 und 13 ist ein fünfter Druckmittelzylinder 20 und zwischen den Lagerbüchsen 12 und 14 ein sechster Druckmittelzylinder 21 angeordnet. Anstelle jeweils eines Druckmittelzylinders zwischen Lagerbüchse und Gestellteil bzw. zwischen den Lagerbüchsen können jeweils auch mehrere Zylinder, z. B. zusätzlich die Druckmittelzylinder 16a, 17a, 18a, 19a, 20a, 21a angeordnet sein. Der erste Druckmittelzylinder 16 erhält zugehörigen Druck über eine erste Druckmittelleitung 22, der zweite Druckmittelzylinder 17 erhält den zugehörigen Druck über eine zweite Druckmittelleitung 23. Der dritte Druckmittelzylinder 18 steht mit einer dritten Druckmittelleitung 24 in Verbindung, der vierte Druckmittelzylinder 19 mit einer vierten Druckmittelleitung 25, der fünfte Druckmittelzylinder 20 mit einer fünften Druckmittelleitung 26 und der sechste Druckmittelzylinder 21 mit einer sechsten Druckmittelleitung 27. Jede der Druckmittelleitungen ist mit einem Einstell-Vorwähl-Steuerungs- oder Regelgerät 28 verbunden. Diesem Regelgerät wird über eine Leitung 29 und eine Pumpe 30 Druckmittel in gewünschter Menge und mit gewünschtem Druck zugeführt. Im Fall, daß das Gerät 28 ein Regelgerät ist, ist diesem Regelgerät noch ein Sensor 31 zugeordnet, der seine Beobachtungen über eine Leitung 32 dem Regelgerät 28 meldet. Beispielsweise kann der Sensor 31 die Durchbiegung eines der beiden Zylinder 2 und 3, beispielsweise diejenige des ersten Zylinders 2 registrieren. Mit Hilfe des Regelgerätes 28 kann den Druckmittelleitungen 22 bis 27, 22a bis 27a usw. (Ausführungsbeispiel nach Fig. 5 und 9) der jeweils gewünschte Druck zugeführt werden. Die in den einzelnen Druckmittelleitungen anstehenden Drücke können entweder untereinander gleich, voneinander verschieden oder aber auch gruppenweise einander gleich sein, so daß beispielsweise zwei oder drei dieser Leitungen den gleichen Druck und die übrigen Leitungen andere Drücke führen. Auf diese Weise entwickeln die Druckmittelzylinder 16 bis 21, 16a bis 21a usw. je nach Wahl des Druckes unterschiedliche Kräfte. Dies Kräfte können während des Maschinenlaufs oder aber auch schon vor Beginn des Maschinenlaufs eingestellt oder vorgewählt werden. Darüber hinaus können diese Drücke während des Maschinenlaufs verändert oder auch moduliert werden. Dabei können die in den Druckmittelzylindern anstehenden Drücke beispielsweise vermindert oder erhöht und je nach Wahl beispeilsweise auch auf Null abgesenkt werden. Auf diese Weise entsteht eine weitgehende Auswahlmöglichkeit, um den ersten 2 und den zweiten Zylinder 3 während des Betreibens der Einrichtung zueinander insbesondere ihren gegenseitigen Abstand einzustellen, zueinander zu lagern oder die Durchbiegungen der beteiligten Maschinenteile zu kompensieren. Dabei kann in den beteiligten Lagern oder Maschinenelementen befindliches Spiel bei gleicher Gelegenheit auch mit beseitigt werden. Der von der Regeleinrichtung 28 in den Druckmittelleitungen 22 bis 27, 22a bis 27a usw. eingestellte Druck kann beispielsweise entsprechend der Laufgeschwindigkeit der Zylinder 2 und 3 bzw. entsprechend der Drehzahl dieser Zylinder verstellt werden. Beispielsweise kann einer geringen Drehzahl relativ geringer Druck, einer höheren Drehzahl höherer Druck zugeordnet werden. Die Druckmittelzylinder sind beispielsweise Metallbalgzylinder oder aber andere Zylinder, die die Verwendung auch relativ hoher Drücke gestatten.

Mit Hilfe der in den Druckmittelzylindern 19, 21 und 17 entwickelten Kräfte wird in den Lagern 8 und 10 ein Kraftfluß hervorgerufen, der die Zylinderzapfen 5 und 6 ebenfalls durchsetzt. Dieser Kraftfluß verläuft im wesentlichen derart, wie durch die strichpunktierte Gerade 33 in Fig. 3 angedeutet. Dieser Kraftfluß beginnt beispielsweise in dem Teil 4b des Gestells 4, durchsetzt den vierten Druckmittelzylinder 19, die Lagerbüchse 14, das Lager 10, den zweiten Zylinderzapfen 6, wieder das Lager 10, nocheinmal die Lagerbüchse 14, den sechsten Druckmittelzylinder 21, die Lagerbüchse 12, das Lager 8, den ersten Zylinderzapfen 5, wiederum das Lager 8 und wiederum die Lagerbüchse 12, den zweiten Druckmittelzylinder 17 und erreicht danach Teil 4a des Gestells 4 und gelangt somit wieder in das Gestell 4. Der Kraftfluß kann auch in umgekehrter Richtung verlaufen.

Ein zweiter Kraftfluß entsteht daneben, wie im wesentlichen durch die Gerade 34 in Fig. 3 angedeutet. Dieser zweite Kraftfluß ist von den Zylindern 2 und 3 weiter entfernt als der näherliegende, entlang der Geraden 33 verlaufende erste Kraftfluß. Der zweite, äußere, durch die Gerade 34 angedeutete Kraftfluß liegt deshalb auf den Zapfen der Zylinder 2 und 3 weiter außen. Dieser äußere Kraftfluß geht beispielsweise ebenfalls von dem Teil 4b des Gestells 4 aus, durchsetzt jedoch den dritten Druckmittelzylinder 18, Lagerbüchse 13, Lager 9, den zweiten Zylinderzapfen 6, wiederum Lager 9 und Lagerbüchse 13, den fünften Druckmittelzylinder 20, Lagerbüchse 11, Lager 7, den ersten Zylinderzapfen 5, wiederum Lager 7 und Lagerbüchse 11, den ersten Druckmittelzylinder 16 und gelangt von dort ebenfalls in das Teil 4a des Gestells 4. Anstelle dieser zwei dargestellten Kraftflüsse können auch mehrere in axialer Richtung der Zylinder 2 und 3 nebeneinander angeordnet sein, was jedoch zu einer Erhöhung des technischen Aufwandes führt. Da die Druckmittelzylinder wahlweise einzeln mit Druck versorgt werden können, entstehen auf diese Weise vorzugsweise zwei Kraftflüsse, die voneinander unabhängig sind und im wesentlichen einander parallel verlaufen. Dies gilt zumindest in denjenigen Abschnitten, in welche die Druckmittelzylinder eingebaut sind. Das Gestell 4 ist jedoch in allen Fällen das gleiche, da die Zylinder 2 und 3 in Fenstern oder Ausnehmungen dieses Gestells gelagert sind. Selbstverständlich ist es einerlei, ob dabei der Kraftfluß in seiner einen oder in seiner anderen Richtung verfolgt wird, weil schließlich eine Kraft ihrer Gegenkraft betragsmäßig gleich ist.

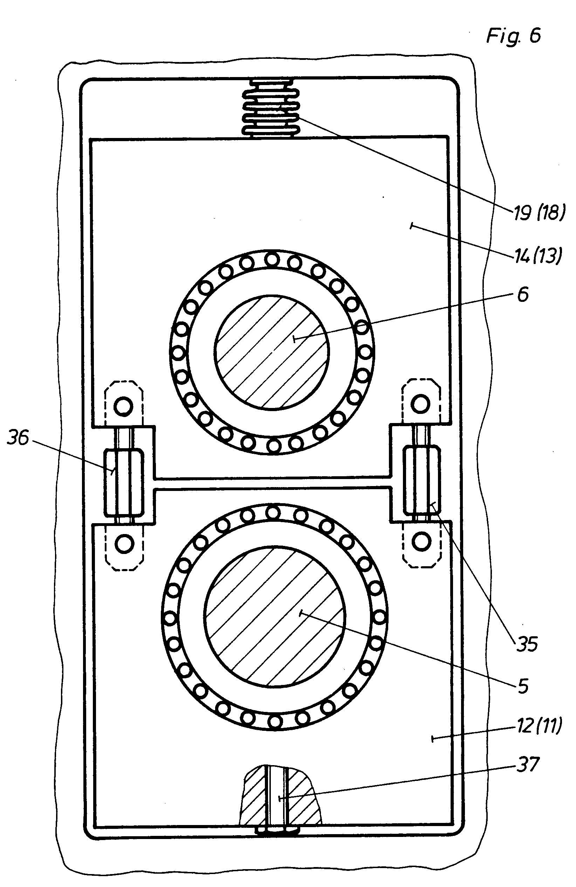

Mit Hilfe der vorgeschlagenen Einrichtung kann der zwischen den Zylindern 2 und 3 befindliche Abstand feinfühlig und innerhalb weiter Grenzen je nach Wunsch eingestellt werden. Daneben ist es möglich, die jeweils wirkenden Kräfte innerhalb weiter Grenzen einzustellen, vorzuwählen oder während des Betriebes der Einrichtung je nach Wunsch auch laufend zu verstellen. Für den Fall, daß die Variations- und Einstellmöglichkeiten während des Betriebes nicht so zahlreich und weitgehend wie eben beschrieben sein sollten und die Einrichtung dafür preisgünstiger werden sollte, ist es möglich, einen Teil der Druckmittelzylinder, wie beispielsweise dei Druckmittelzylinder 16, 17, 20 und 21 durch verschiebbare Keile, verstellbare Spannschlösser 35, 36 oder verstellbare Anschlagschrauben 37 zu ersetzen (Ausführungsbeispiel nach Fig. 6). In jedem Fall muß aber dafür Sorge getragen werden, daß je Kraftfluß mindestens ein Druckmittelzylinder, beispielsweise die Druckmittelzylinder 18 und 19 in der Einrichtung vorhanden bleiben, damit es möglich ist, die auf die Zylinderzapfen wirkenden Kräfte auch während des Betriebes, d. h. während des Umlaufens der Zylinder 2 und 3 nach Wunsch verändern zu können. Daneben ist es möglich, die Druckmittelzylinder oder Gruppen von ihnen strömungstechnisch parallelliegend mit Druckmittel zu versorgen.

### Teileliste

- 1: Bahn
- 2: erster Zylinder
- 3: zweiter Zylinder
- 4: Gestell
- 4a: Teil von Gestell
- 4b: Teil von Gestell
- 5: erster Zylinderzapfen
- 6: zweiter Zylinderzapfen
- 7: Lager
- 8: Lager
- 9: Lager
- 10: Lager
- 11: Lagerbüchse
- 12: Lagerbüchse
- 13: Lagerbüchse
- 14: Lagerbüchse
- 15: Fenster
- 16: erster Druckmittelzylinder
- 16a: erster Druckmittelzylinder
- 17: zweiter Druckmittelzylinder
- 17a: zweiter Druckmittelzylinder
- 18: dritter Druckmittelzylinder
- 18a: dritter Druckmittelzylinder
- 19: vierter Druckmittelzylinder
- 19a: vierter Druckmittelzylinder
- 20: fünfter Druckmittelzylinder
- 20a: fünfter Druckmittelzylinder
- 21: sechster Druckmittelzylinder
- 21a: sechster Druckmittelzylinder
- 22: erste Druckmittelleitung
- 22a: erste Druckmittelleitung
- 23: zweite Druckmittelleitung
- 23a: zweite Druckmittelleitung
- 24: dritte Druckmittelleitung
- 24a: dritte Druckmittelleitung
- 25: vierte Druckmittelleitung
- 25a: vierte Druckmittelleitung
- 26: fünfte Druckmittelleitung
- 26a: fünfte Druckmittelleitung
- 27: sechste Druckmittelleitung
- 27a: sechste Druckmittelleitung
- 28: Regelgerät
- 29: Leitung
- 30: Pumpe
- 31: Sensor
- 32: Leitung
- 33: Gerade
- 34: Gerade
- 35: Spannschloß
- 36: Spannschloß
- 37: Anschlag

## Patentansprüche

1. Einrichtung zum Lagern eines Zylinderpaares (2, 3), insbesondere für Zylinder zum Bearbeiten von Bogen oder Bahnen (1) aus Papier, Gewebe, Folie, Kunststoffen, Metallen o. dgl. mit mindestens zwei Lagergehäusen (11, 12, 13, 14) je Zapfen (5, 6) der jeweils beteiligten Zylinder (2, 3), wobei der gegenseitige Abstand der Zylinder (2, 3) einstellbar und ein Lager (8, 10) jedes Zapfens (5, 6) einer Druckeinrichtung ausgesetzt ist, dadurch gekennzeichnet, daß jeder Zapfen (5, 6) jedes beteiligten Zylinders (2, 3) mindestens zwei voneinander getrennten, einander im wesentlichen parallel, getrennt einstellbar verlaufenden Kraftflüssen unterliegt, von denen einer dem Zylinder (2, 3) näher und ein anderer entfernter verläuft und jeder der Kraftflüsse von dem Gestell (4) ausgehend zunächst eine Lagerbüchse (12) des ersten Zylinders (2) durchsetzt, danach von der Lagerbüchse (12) des ersten (2) zu derjenigen (14) des zweiten Zylinders (3) wechselt und danach von der Lagerbüchse (14) des zweiten Zylinders (3) wieder in das Gestell (4) oder in umgekehrter Reihenfolge verläuft.

2. Einrichtung nach Anspruch 1, dadurch gekennzeichnet, daß sowohl zwischen den Lagerbüchsen (11, 13, 12, 14) des jeweils äußeren (7, 9) als auch des jeweils inneren Lagers (8, 10) zwischen dem einen Teil (4a) des Gestells (4) und der Lagerbüchse (14) des zweiten Zylinders (3) als auch einem anderen Teil (4b) des Gestells (4) und der Lagerbüchse (12) des ersten Zylinders (2) und den Lagerbüchsen (11, 12) des ersten (2) und des zweiten Zylinders (3) mindestens ein Druckmittelzylinder (16 - 21) angeordnet ist.

3. Einrichtung nach den Ansprüchen 1 und 2, dadurch gekennzeichent, daß jeweils zwischen Lagerbüchse (11 - 14) und Gestell (4) sowie zwischen den Lagerbüchsen (11 - 14) verschiedener Zylinder (2, 3) mindestens ein Druckmittelzylinder (20, 21) angeordnet ist.

4. Einrichtung nach den Ansprüchen 1 bis 3, dadurch gekennzeichnet, daß die jeweiligen Lager Wälzlager sind.

5. Einrichtung nach Anspruch 4, dadurch gekennzeichnet, daß jedes Wälzlager mehrere in axialer Richtung nebeneinanderliegende Reihen von Wälzkörpern enthält.

6. Einrichtung nach den Ansprüchen 1 bis 3, dadurch gekennzeichnet, daß die in den Druckmittelzylindern (16 - 20, 16a - 20a) befindlichen Drücke einzeln oder gemeinsam einstellbar, steuerbar oder regelbar sind.

7. Einrichtung nach den Ansprüchen 1 bis 3, dadurch gekennzeichnet, daß die Druckmittelzylinder (16 - 20, 16a - 20a) teilweise durch Spannschlösser (35, 36) oder Anschlagschrauben (37) ersetzbar sind.

## Claims

1. Arrangement for mounting a pair (2, 3) of cylinders, in particular for cylinders for processing sheets or webs (1) of paper, fabric, foil, plastics, metals or the like, having at least two bearing housings (11, 12, 13, 14) per journal (5, 6) of the cylinders (2, 3) respectively involved, the mutual spacing of the cylinders (2, 3) being adjustable, and a bearing (8, 10) of each journal (5, 6) being subjected to a pressing device, characterized in that each journal (5, 6) of each cylinder (2, 3) involved is subject to at least two mutually separate, mutually substantially parallel, separately adjustable force flows, of which one runs more closely to the cylinder (2, 3) and another runs further away from it, and each of the force flows, starting from the frame (4), first passes through a bearing bush (12) of the first cylinder (2), then moves from the bearing bush (12) of the first cylinder (2) to that (14) of the second cylinder (3) and then runs from the bearing bush (14) of the second cylinder (3) back into the frame (4), or runs in reverse sequence.

2. Arrangement according to Claim 1, characterized in that at least one pressurized medium cylinder (16 - 21) is arranged both between the bearing bushes (11, 13, 12, 14) of the respectively outer bearing (7, 9) and of the respectively inner bearing (8, 10) between the one part (4a) of the frame (4) and the bearing bush (14) of the second cylinder (3) and another part (4b) of the frame (4) and the bearing bush (12) of the first cylinder (2) and the bearing bushes (11, 12) of the first cylinder (2) and of the second cylinder (3).

3. Arrangement according to Claims 1 and 2, characterized in that at least one pressurized medium cylinder (20, 21) is arranged respectively between the bearing bush (11 - 14) and the frame (4) and between the bearing bushes (11 - 14) of different cylinders (2, 3).

4. Arrangement according to Claims 1 to 3, characterized in that the respective bearings are roller bearings.

5. Arrangement according to Claim 4, characterized in that each roller bearing contains a plurality of axially adjacent rows of roller bodies.

6. Arrangement according to Claims 1 to 3, characterized in that the pressures in the pressurized medium cylinders (16 - 20, 16a - 20a) can be adjusted, controlled or regulated individually or collectively.

7. Arrangement according to Claims 1 to 3, characterized in that the pressurized medium cylinders (16 - 20, 16a - 20a) may be replaced in some cases by turnbuckles (35, 36) or stop screws (37).

## Revendications

1. Dispositif pour monter sur paliers un couple de cylindres (2, 3), en particulier pour des cylindres destinés au façonnage de papier, de textile, de matériau en feuilles, de matières plastiques, de métaux et similaires, en rames ou en bande (1), comportant au moins deux carters de palier (11, 12, 13, 14) par tourillon (5, 6) de chacun des cylindres (2, 3) concerné, la distance des cylindres (2, 3) l'un par rapport à l'autre étant réglable, et un palier (8, 10) de chaque tourillon (5, 6) étant raccordé à une installation de mise en pression, caractérisé en ce que chaque tourillon (5, 6) de chaque cylindre (2, 3) concerné est soumis à au moins deux flux de forces séparés l'un de l'autre, essentiellement parallèles l'un à l'autre, dirigés d'une façon réglable séparément, en ce que l'un passe plus près du cylindre (2, 3) et un autre plus loin, et en ce que chacun des flux de forces traverse d'abord, en partant du bâti (4), une douille de palier (12) du premier cylindre (2), puis passe de la douille de palier (12) du premier cylindre (2) à celle (14) du deuxième cylindre (3) et ensuite passe de la douille de palier (14) du deuxième cylindre (3) de nouveau dans le bâti (4), ou suit un trajet inverse.

2. Dispositif suivant la revendication 1, caractérisé en ce qu'aussi bien entre les douilles de palier (11, 13, 12, 14) de chaque palier extérieur (7, 9) qu'entre celles de chaque palier intérieur (8, 10), entre l'une des pièces (4a) du bâti (4) et la douille de palier (14) du deuxième cylindre (3) qu'entre une autre pièce (4b) du bâti (4) et la douille de palier (12) du premier cylindre (2) et les douilles de palier (11, 12) du premier cylindre (2) et du deuxième cylindre (3), est disposé au moins un cylindre à fluide de pression (16 - 21).

3. Dispositif suivant la revendication 1 et la revendication 2, caractérisé en ce que chaque fois, entre les douilles de palier (11 - 14) et le bâti (4), ainsi qu'entre les douilles de palier (11 - 14) des différents cylindres (2, 3) est disposé au moins un cylindre à fluide de pression (20, 21).

4. Dispositif suivant les revendications 1 à 3, caractérisé en ce que les différents paliers sont des paliers à roulements.

5. Dispositif suivant la revendication 4, caractérisé en ce que chaque palier à roulements contient plusieurs rangs de corps de roulements disposés les uns à côté des autres suivant la direction axiale.

6. Dispositif suivant les revendications 1 à 3, caractérisé en ce que les pressions existant dans les cylindres à fluide de pression (16 - 20, 16a - 20a) sont réglables, commandables ou régulables, séparément ou toutes ensemble.

7. Dispositif suivant les revendications 1 à 3, caractérisé en ce que l'on peut remplacer en partie les cylindres à fluide de pression (16 - 20, 16a - 20a) par des serrures de mise en tension (35, 36) ou des vis de butée (37).
